# EUROPEAN PATENT APPLICATION

(11) **EP 4 807 857 A1**
(43) Date of publication of application: **16.09.2026**
(21) Application number: 25869591.5
(22) Date of filing: 26.03.2025
(51) Int. Cl.: H01M 10/613, H01M 10/6556, H01M 10/6568, H01M 10/643, H01M 50/342

(54) **BATTERY THERMAL MANAGEMENT SYSTEM, BATTERY PACK, AND ELECTRIC APPARATUS**

(30) Priority: 23.01.2025 CN 202520167677 U
(71) Applicant: Eve Energy Co., Ltd., Huizhou, Guangdong 516006 (CN)
(72) Inventor: ZHOU, Hongquan, Huizhou, Guangdong 516006 (CN)
(74) Representative: Herrero & Asociados, S.L.
(86) International application number: PCT/CN2025/084856
(87) International publication number: WO 2026/157011

(57) **Abstract**

The present disclosure relates to a battery thermal management system, a battery pack, and an electrical device. The battery thermal management system includes a battery module, where the battery module includes a frame body as well as a fitting plate and a liquid cooling plate fitted at opposite sides of the frame body, a fitting cavity is formed by the frame body, the fitting plate, and the liquid cooling plate to fit a plurality of battery cells, the liquid cooling plate is provided with a plurality of flow guiding columns protruding from the liquid cooling plate, a liquid cooling flow channel is provided in the liquid cooling plate, each of the flow guiding columns is provided with a flow guiding hole, and the liquid cooling flow channel is in communication with the fitting cavity through the flow guiding holes.

## Description

This application claims priority to Chinese Patent Application No. 202520167677.8, filed with the Chinese Patent Office on Thursday, January 23, 2025, content of which is incorporated herein by reference in its entirety.

### TECHNICAL FIELD

The present disclosure relates to the field of battery technologies, and more particular to a battery thermal management system, a battery pack, and an electrical device.

### BACKGROUND

In the core technical field, i.e., a power battery system, of new energy vehicles, the performance of the power battery system is directly related to the overall performance of an electric vehicle. Currently, a conventional solution for the power battery system of the electric vehicle is mainly to maintain an operating temperature range of a battery by using a radiation plate to radiate and heat a battery pack.

### SUMMARY

### Technical Problems

However, it was discovered in a process of charging and discharging the battery pack that the temperature gradient of the battery pack is relatively large, that is, the temperature difference between different regions inside the battery pack is relatively obvious, and such an ununiform temperature distribution can seriously affect the electrochemical performance and service life of the battery. In addition, in the case of a high power requirement, such as when the vehicle is driven at a high speed or rapidly accelerated, a case in which heat dissipation is insufficient is highlighted, so that the battery cannot quickly and effectively perform heat dissipation, and therefore, the power performance of the battery cannot meet actual use requirements. Moreover, if the battery is exposed to a high temperature environment for a long time, aging and deterioration of the internal material of the battery may be accelerated, so that the service life of the battery is greatly reduced. Therefore, there is an urgent need to improve the heat dissipation technology in the prior art.

### Technical Solutions

In a first aspect, the present disclosure provides a battery thermal management system, including:
a battery module, where the battery module includes a frame body as well as a fitting plate and a liquid cooling plate fitted at opposite sides of the frame body, a fitting cavity is formed by the frame body, the fitting plate, and the liquid cooling plate to fit a plurality of battery cells, the liquid cooling plate is provided with a plurality of flow guiding columns protruding from the liquid cooling plate, a liquid cooling flow channel is provided in the liquid cooling plate, each of the flow guiding columns is provided with a flow guiding hole, and the liquid cooling flow channel is in communication with the fitting cavity through the flow guiding holes; and
a liquid cooling circulation pump being in communication with both a first conduit and a second conduit, where the first conduit is configured to be in communication with a liquid outlet communicating with the fitting cavity and the second conduit is in communication with the liquid cooling flow channel, so as to enable a cooling medium to immerse the battery cells.

In a second aspect, the present disclosure provides a battery pack, including the battery thermal management system described above.

In a third aspect, the present disclosure provides an electrical device, including the battery module described above.

### Beneficial Effects

The beneficial effects provided by the present disclosure are that the contact area and the heat exchange efficiency between the cooling liquid and the battery cells are increased by fully immersing the battery cells in the cooling liquid using the above structure, so that the heat generated by the battery cells in the process of charging and discharging the battery cells can be more effectively dissipated, the performance and the service life of the battery cells can be improved by maintaining the battery cells in an appropriate operating temperature range, and the stable operation of the battery module can be ensured by reducing the attenuation of the battery capacity and the increase of the internal resistance due to overheating. Furthermore, the temperature distribution around the battery cells is more uniform, and the temperature uniformity is critical to the performance and safety of the battery module, so that potential safety hazards such as thermal runaway of the battery caused by local high temperature can be avoided, and the overall charging and discharging efficiency and consistency of the battery module can be improved, the performance difference of the battery cells can be reduced, and the service life of the battery module can be prolonged.

### DESCRIPTION OF THE DRAWINGS

FIG. 1 is a schematic structural view of a battery thermal management system according to some embodiments of the present disclosure.
FIG. 2 is a schematic exploded view of a battery module of a battery thermal management system according to some embodiments of the present disclosure.
FIG. 3 is a partially enlarged view of a portion A in FIG. 2.
FIG. 4 is a partially enlarged view of a portion B in FIG. 2.
FIG. 5 is a cross-sectional view of a battery thermal management system according to some embodiments of the present disclosure.
FIG. 6 is a schematic structural view of a liquid cooling plate of a battery thermal management system according to some embodiments of the present disclosure.
FIG. 7 is a schematic structural view of a fitting plate of a battery thermal management system according to some embodiments of the present disclosure.

In FIGS: 1-Battery module, 11-Frame body, 12-Fitting plate, 121-First flow channel, 122-Liquid passage hole, 13-Liquid cooling plate, 131- Liquid cooling flow channel, 132-Flow guiding column, 1321-Flow guiding hole, 1322-Arc-shaped curved surface, 133-Weak structure, 134-Pressure relief channel, 14-Fitting cavity, 15-Fixing bracket, 151-Fixing hole, 16-CCS assembly, 17-Battery cell, 2-Liquid cooling circulation pump, 21-First conduit, and 22-Second conduit.

### DETAILED DESCRIPTION

Embodiments of the present disclosure disclose a battery thermal management system in which battery cells are fully immersed in a cooling fluid to increase a heat exchange area of a battery body, improve the temperature uniformity of the battery, reduce a temperature difference of the system, meet a high-power discharging, and improve a service life of the battery thermal management system.

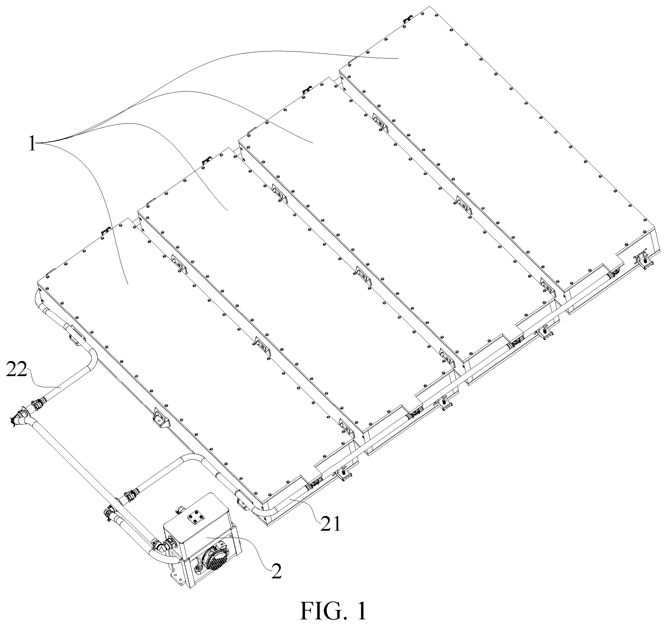

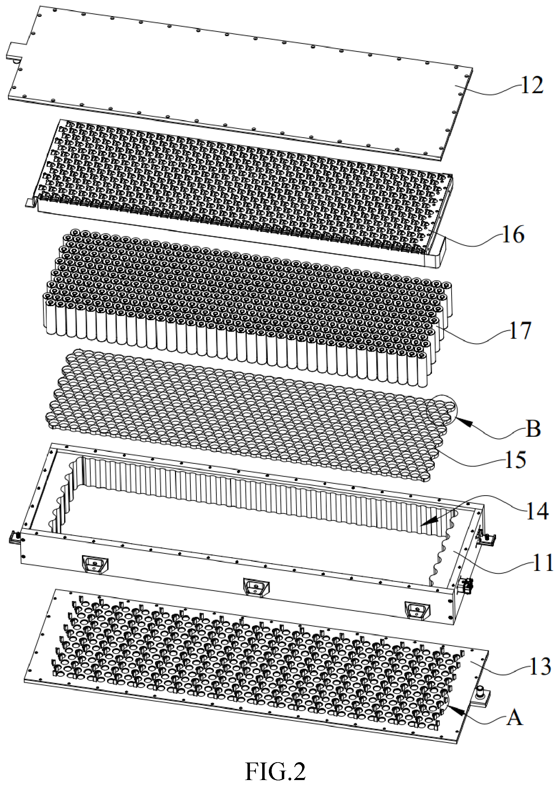

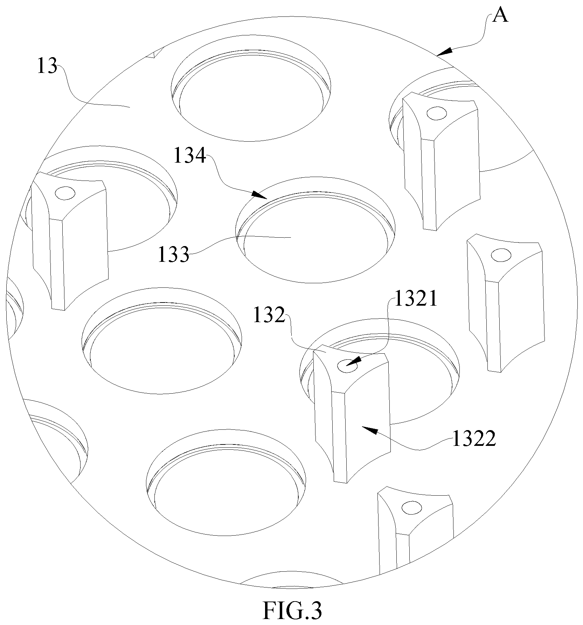

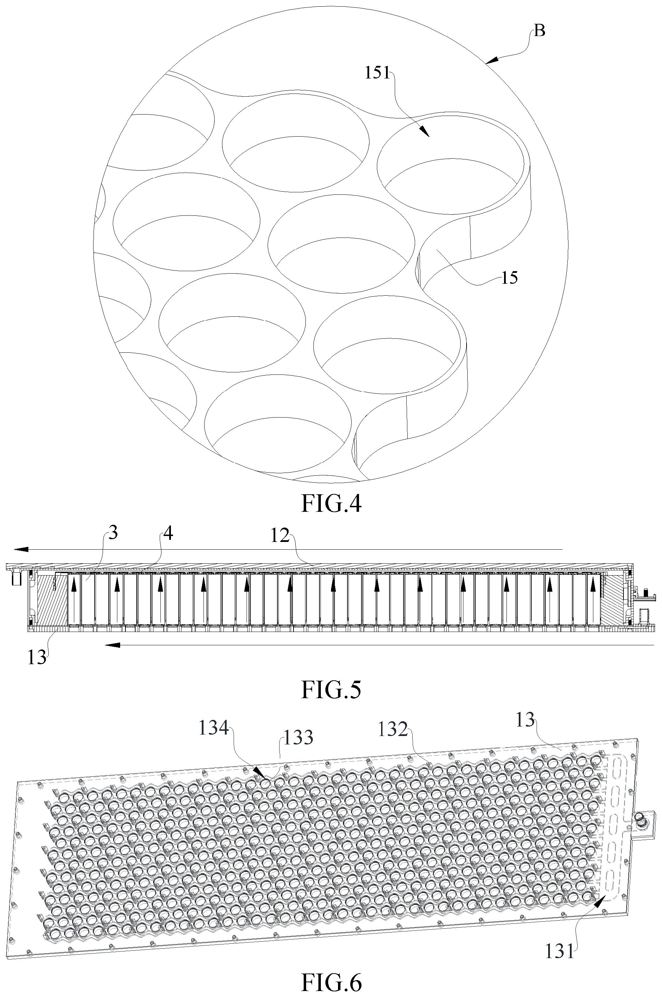

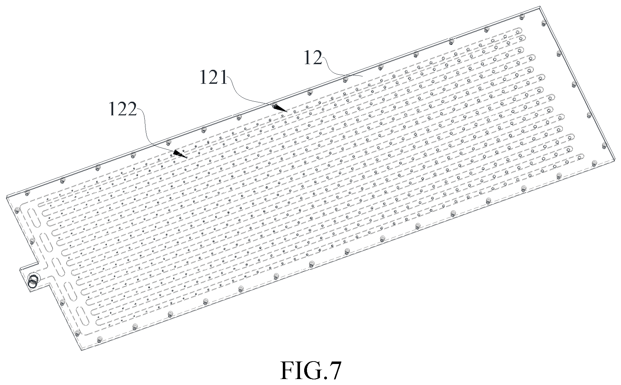

A specific solution of the battery thermal management system of the present disclosure is described below with reference to FIGS. 1-7.

Specifically, the battery thermal management system includes a battery module 1.

The battery module 1 includes a frame body 11 as well as a fitting plate 12 and a liquid cooling plate 13 fitted at opposite sides of the frame body 11, and a fitting cavity 14 is formed by the frame body 11, the fitting plate 12, and the liquid cooling plate 13 to fit a plurality of battery cells 17. The liquid cooling plate 13 is provided with a plurality of flow guiding columns 132 protruding from the liquid cooling plate 13, a liquid cooling flow channel 131 is provided in the liquid cooling plate 13, each of the flow guiding columns 132 is provided with a flow guiding hole 1321, and the liquid cooling flow channel 131 is in communication with the fitting cavity 14 through the flow guiding holes 1321. In the illustrated embodiments, the liquid cooling plate 13 is located at the underside of the fitting plate 12.

The battery thermal management system further includes a liquid cooling circulation pump 2.

The liquid cooling circulation pump 2 is in communication with both a first conduit 21 and a second conduit 22, where the first conduit 21 is configured to be in communication with a liquid outlet communicating with the fitting cavity 14 and the second conduit 22 is in communication with the liquid cooling flow channel 131, so as to enable a cooling medium to immerse the battery cells 17.

In the present disclosure, a following cooling liquid circulation path may be formed: the cooling liquid first enters the liquid cooling flow channel 131 of the liquid cooling plate 13, and since the liquid cooling plate 13 is provided with the plurality of flow guiding columns 132 and each of the flow guiding columns 132 has a flow guiding hole 1321 in communication with the liquid cooling flow channel 131, when the cooling liquid flows in the liquid cooling flow channel 131, the cooling liquid flows out through the flow guiding holes 1321 of the flow guiding columns 132 and then flows into the fitting cavity 14, and directly exchanges heat with the battery cells 17 in the fitting cavity 14, thereby absorbing heat generated by the battery cells 17. Finally, the cooling liquid flows out from the liquid outlet of the fitting cavity 14 and passes through the first conduit 21, the liquid cooling circulation pump 2 and the second conduit 22 to form a complete cooling liquid circulation process. Further, after the cooling liquid flows out through the flow guiding holes 1321 of the plurality of flow guiding columns 132, it is possible to more evenly distribute the cooling liquid around the battery cells 17, thereby taking away the heat generated by the battery cells 17 and ensuring the temperature uniformity of the battery cells 17.

Further, the liquid cooling circulation pump 2 can drive the cooling liquid to circularly flow in the above cooling liquid path, and the cooling liquid can effectively absorb the heat generated by the battery in the circulation process, so that the heat can be taken away in time through the liquid cooling circulation, thereby maintaining the operating temperature of the battery within a proper range, and avoiding overheating of the battery.

In summary, the contact area and the heat exchange efficiency between the cooling liquid and the battery cells 17 are increased by fully immersing the battery cells 17 in the cooling liquid using the above structure, so that the heat generated by the battery cells 17 in the process of charging and discharging the battery cells 17 can be more effectively dissipated, the performance and the service life of the battery cells 17 can be improved by maintaining the battery cells 17 in an appropriate operating temperature range, and the stable operation of the battery module 1 can be ensured by reducing the attenuation of the battery capacity and the increase of the internal resistance due to overheating. Furthermore, the temperature distribution around the battery cells 17 is more uniform, and the temperature uniformity is critical to the performance and safety of the battery module 1, so that potential safety hazards such as thermal runaway of the battery caused by local high temperature can be avoided, and the overall charging and discharging efficiency and consistency of the battery module 1 can be improved, the performance difference of the battery cells 17 can be reduced, and the service life of the battery module 1 can be prolonged.

Specifically, the fitting plate 12 has a first flow channel 121 communicating with the first conduit 21, and a liquid passage hole 122 communicating the first flow channel 121 with the fitting cavity 14.

In the present disclosure, a following cooling liquid circulation path may be formed: the cooling liquid first enters the liquid cooling flow channel 131 of the liquid cooling plate 13, and since the liquid cooling plate 13 is provided with the plurality of flow guiding columns 132 and each of the flow guiding columns 132 has a flow guiding hole 1321 in communication with the liquid cooling flow channel 131, when the cooling liquid flows in the liquid cooling flow channel 131, the cooling liquid flows out through the flow guiding holes 1321 of the flow guiding columns 132 and then flows into the fitting cavity 14, and directly exchanges heat with the battery cells 17 in the fitting cavity 14, thereby absorbing heat generated by the battery cells 17. Finally, the cooling liquid flows from the fitting cavity 14 into the first flow channel 121 of the fitting plate 12, takes away the absorbed heat from the system through the first flow channel 121, and passes through the first conduit 21, the liquid cooling circulation pump 2 and the second conduit 22 to form a complete cooling liquid circulation process. As such, the first flow channel 121 and the liquid passage hole 122 of the fitting plate 12 may serve as a liquid outlet in communication with the fitting cavity 14 to guide the cooling medium within the fitting cavity 14 away.

Specifically, the battery cell 17 may be a cylindrical battery, and may be a large cylindrical battery. For example, the diameter of the battery cell 17 may be generally in the range of 42mm-60mm.

Specifically, the liquid cooling plate 13 is provided with a plurality of weak structures 133 and pressure relief channels 134 respectively corresponding to the weak structures 133, and each of the weak structures 133 corresponds to a pressure relief opening of one battery cell 17. The battery thermal management system of the present disclosure uses the liquid cooling plate 13 to perform heat dissipation, and also uses the liquid cooling plate 13 to perform pressure relief to improve overall safety. For example, when the internal pressure of a certain battery cell 17 rises abnormally, the weak structure 133 corresponding to the certain battery cell 17 can be rapidly broken, so that the pressure is released in time through the pressure relief channel 134 corresponding to the weak structure 133, thereby effectively preventing serious safety accidents such as bulging, cracking or even explosion of the battery cell 17 due to excessive pressure, accurately protecting each of the battery cells 17, and improving the overall safety of the battery system. More importantly, this one-to-one pressure relief design allows the battery cell 17 having an abnormal situation to be separated from other normal battery cells 17 to prevent the failure of the single battery cell 17 from causing excessive impact on the entire battery pack, improve the fault tolerance of the battery system, and reduce the risk of overall system failure due to local failure.

Specifically, the weak structure 133 may be made of either a high-temperature-resistant plastic film, such as a PI- Polyimide film, or a rubber film, such as a NBR- Nitrile Butadiene Rubber film, which can withstand a certain degree of pressure and realize pressure relief by deformation of the weak structure 133 itself until it is broken when the internal pressure of the battery cell 17 is too high.

Alternatively, the weak structure 133 may be a score, which may be formed in the position of the liquid cooling plate 13 corresponding to the pressure relief opening of the battery cell 17 by machining or laser etching or the like. For example, a cross-shaped score may be used, and the depth of the score may be designed according to the maximum pressure that may be generated by the battery cell 17. In general, the depth of the score may be between 0.1mm-0.5mm. When the internal pressure of the battery cell 17 reaches a certain level, the material at the score is first broken due to stress concentration, thereby achieving pressure relief.

Specifically, the flow guiding column 132 is disposed at a side of the battery cell 17, and a side surface of the flow guiding column 132 toward the battery cell 17 has an arc-shaped curved surface 1322. Since the battery cell 17 is specifically a cylindrical battery in practice, a suitable structure can be formed to avoid interference or collision. More importantly, the flow guiding column 132 is also capable of restricting the battery cell 17.

Specifically, at least three arc-shaped curved surfaces 1322 are formed on the flow guiding column 132. In practical design considerations, each of most of the flow guiding columns 132 is arranged at sides of three cylindrical battery cells 17, and it is easy to interfere with each other between the flow guiding columns 132 and the battery cells 17 without a reasonable design of the flow guiding columns 132 and the battery cells 17.

As such, an arc-shaped curved surface 1322 is formed on the flow guiding column 132 in the present disclosure, so that the flow guiding column 132 being in contact with the battery cells 17 can be skillfully avoided when the flow guiding column 132 is disposed at the sides of the three cylindrical battery cells 17, thereby achieving a reasonable spatial layout and making the entire structure including the battery cells 17 and the flow guiding column 132 more scientific and orderly in spatial arrangement. After the interference is avoided, the battery cell 17 can normally perform functions such as storing and releasing electric energy without being adversely affected by the flow guiding column 132, and at the same time, the flow guiding column 132 can normally function as it would otherwise be, such as by directing a fluid, to ensure normal operation of the entire system.

Specifically, the battery module 1 further includes a CCS assembly 16, which refers to a CCS (Cells Contact System), also referred to as a harness board integration member. The CCS assembly 16 is disposed within the fitting cavity 14 of the frame body 11 and located between the fitting plate 12 and the plurality of battery cells 17, and is electrically connected to the plurality of battery cells 17. In practical design considerations, the CCS assembly is used as an important component electrically connected to the battery cells 17 and generates heat during operation. If such heat is not dissipated in a timely manner, it may cause the CCS assembly to be excessively high in temperature, which may affect its electrical properties of the CCS assembly, such as increasing resistance, decreasing conductive efficiency, and the like.

As such, the cooling fluid is used to dissipate heat from the CCS assembly in the present disclosure, so that the possible performance degradation of the CCS assembly due to the heat from the CCS assembly is solved, and the temperature of the CCS assembly can be maintained within a reasonable range to ensure normal operation of the CCS assembly. Furthermore, the heat radiation of the CCS assembly is combined with the liquid cooling heat radiation of the battery, so that the structure of the entire battery system is more compact and reasonable, and the integration degree of the battery thermal management system is enhanced.

Specifically, a plurality of liquid passage holes 122 are provided at one side of the fitting plate 12 toward the liquid cooling plate 13 and commonly communicated with the first flow channel 121 in the fitting plate 12. In the related art, the cooling liquid may flow out only from a single outlet or a few outlets, which may cause the cooling liquid to be very ununiform in the circulation flow process. For example, the cooling liquid flow in the region close to the outlet is larger and the cooling effect is better, and the cooling liquid in the region far from the outlet is difficult to reach and a phenomenon of local overheating occurs, which affects the performance of the entire heat dissipation system.

As such, the plurality of liquid passage holes 122 are disposed in common communication with the first flow channel 121 in the present disclosure, so that the cooling liquid can circularly flow uniformly from a plurality of positions, and the uniformly flowing cooling liquid can take away heat more effectively, thereby ensuring that the cooling liquid can better cover the entire region to be cooled, avoiding the occurrence of partial cooling insufficiency, and thus improving the performance and stability of the device and prolonging the service life of the device. Further, provision of the plurality of liquid passage holes 122 can balance the pressure inside the fitting plate 12, and when the cooling liquid flows out from the plurality of positions, the pressure difference of the plurality of portions inside the liquid cooling plate 13 is reduced, so that the cooling liquid can flow at a more stable and reasonable flow rate, thereby improving the cooling efficiency.

Specifically, the fitting cavity 14 in the frame body 11 extends through opposite sides of the frame body 11 to form a structure having two opposite openings, and the fitting plate 12 and the liquid cooling plate 13 are sealingly provided at the two opposite openings of the frame body 11, respectively. In the present disclosure, the fitting cavity 14 forms an opening structure by extending through the opposite sides of the frame body 11. When it is necessary to increase the number of the battery cells 17 or to maintain and replace the existing battery cells 17, the structure provides a convenient operation channel, and the battery cells 17 can be inspected, maintained or replaced one by one through the opening without causing excessive damage to the structure of the entire battery system, which is very convenient and fast.

Specifically, the fitting cavity 14 is provided with a fixing bracket 15 configured for fixing the plurality of battery cells 17, the fixing bracket 15 is provided with a plurality of fixing holes 151 penetrating the fixing bracket 15 along the thickness of the fixing bracket 15, and each of the fixing holes 151 is provided for fitting respective one of the battery cells 17. It is considered in the solution design that components such as tabs of the battery cell 17 may be damaged if the battery cell 17 is shaken in the fitting cavity 14. In particular, in some application scenarios in which safety requirements are extremely high, for example, in an electric vehicle, damage to the tabs of the battery may cause potential safety hazards such as short circuits.

As such, the fixing bracket 15 is provided in the present disclosure, and the fixing bracket 15 and the fixing holes 151 are engaged with each other, so that the battery cells 17 form a stable integral structure in the fitting cavity 14, and the relative position between the battery cells 17 can be kept stable when the battery cells 17 are subjected to external impact force or vibration. More importantly, since the fixing hole 151 provides an unambiguous fitting position for the battery cell 17, the worker can mount the battery cell 17 to the fixing bracket 15 more quickly and accurately, and the fitting speed is greatly improved. For example, in the automatic production line of the battery module, the fixing structure may enable an arm of a robot to perform the fitting operation of the battery cell 17 more accurately, reduce the fitting time, and improve the productivity of the entire production line.

Specifically, the battery module 1 is provided in a plurality, and the plurality of battery modules 1 share the first conduit 21 and the second conduit 22 in the liquid cooling circulation pump 2. In practical design considerations, when the plurality of battery modules 1 are present, if each of the battery modules 1 is individually equipped with components such as pipelines related to the liquid cooling circulation, the overall system may be overly complicated and costly. As such, the plurality of battery modules 1 share the first conduit 21 and the second conduit 22 of the liquid cooling circulation pump 2 in the present disclosure, so that the pipeline layout of the system can be simplified, the number of components can be reduced, and the construction cost of the system and the complexity of subsequent maintenance can be reduced while the heat dissipation function is ensured. Furthermore, the plurality of battery modules 1 share the related conduits of the liquid cooling circulation pump 2 on the basis of increasing the battery capacity, so that the whole battery thermal management system is more compact and more integrated. Repeated configuration of the components such as the conduits is reduced and the material cost and the installation cost are reduced from a cost point of view. In the subsequent maintenance and maintenance, the system is relatively simple, so that the possible situations can be more efficiently positioned and processed, the maintenance efficiency is improved, and the maintenance cost is saved.

The embodiments of the present disclosure further discloses a battery pack, including the battery module described above. Therefore, the present battery pack has all the beneficial effects of the battery thermal management system according to any one of the above-described embodiments of the present disclosure, which is not repeatedly described again herein.

The embodiments of the present disclosure further discloses an electrical device, including the battery pack described above. Therefore, the present electrical device has all the beneficial effects of the battery pack according to any one of the above-described embodiments of the present disclosure, which is not repeatedly described again herein.

Specifically, in the field of electric vehicles, the electrical device may be a pure electric vehicle, a hybrid electric vehicle, or the like.

## Claims

1. A battery thermal management system, comprising:
a battery module (1), wherein the battery module (1) comprises a frame body (11) as well as a fitting plate (12) and a liquid cooling plate (13) respectively fitted at opposite sides of the frame body (11), a fitting cavity (14) is formed by the frame body (11), the fitting plate (12), and the liquid cooling plate (13) to fit a plurality of battery cells (17), the liquid cooling plate (13) is provided with a plurality of flow guiding columns (132) protruding from the liquid cooling plate (13), a liquid cooling flow channel (131) is provided in the liquid cooling plate (13), the flow guiding columns (132) is provided with a flow guiding hole (1321), and the liquid cooling flow channel (131) is in communication with the fitting cavity (14) through the flow guiding holes (1321); and
a liquid cooling circulation pump (2) being in communication with both a first conduit (21) and a second conduit (22), wherein the first conduit (21) is configured to be in communication with a liquid outlet communicating with the fitting cavity (14) and the second conduit (22) is in communication with the liquid cooling flow channel (131), so as to enable a cooling medium to immerse the battery cells (17).

2. The battery thermal management system of claim 1, wherein the fitting plate (12) has both a first flow channel (121) communicating with the first conduit (21) and a liquid passage hole (122) communicating the first flow channel (121) with the fitting cavity (14).

3. The battery thermal management system of claim 1, wherein the liquid cooling plate (13) is provided with a plurality of weak structures (133) and pressure relief channels (134) respectively corresponding to the weak structures (133), and each of the weak structures (133) corresponds to a pressure relief opening of respective one of the battery cells (17).

4. The battery thermal management system of claim 1, wherein the fitting cavity (14) extends through opposite sides of the frame body (11) to form a structure having two opposite openings; and
the fitting plate (12) and the liquid cooling plate (13) are sealingly provided at the two opposite openings of the frame body (11), respectively.

5. The battery thermal management system of any one of claims 1-4, wherein the flow guiding columns (132) is disposed at a side of respective one of the battery cells (17), and a side surface of the flow guiding column (132) toward the battery cell (17) has an arc-shaped curved surface (1322); and
at least three arc-shaped curved surfaces (1322) are formed on the flow guiding column (132).

6. The battery thermal management system of any one of claims 1-4, wherein the fitting cavity (14) is provided with a fixing bracket (15) configured for fixing the plurality of battery cells (17), and the fixing bracket (15) is provided with a plurality of fixing holes (151) penetrating the fixing bracket (15) along a thickness of the fixing bracket (15), and each of the fixing holes (151) is provided for fitting respective one of the battery cells (17).

7. The battery thermal management system of any one of claims 1-4, wherein the battery module (1) further comprises a CCS assembly (16), and wherein the CCS assembly (16) is disposed within the fitting cavity (14) of the frame body (11) and located between the fitting plate (12) and the plurality of battery cells (17), and the CCS assembly (16) is electrically connected to the plurality of battery cells (17).

8. The battery thermal management system of any one of claims 1-4, wherein the battery module (1) is provided in a plurality, and the plurality of battery modules (1) share the first conduit (21) and the second conduit (22) in the same liquid cooling circulation pump (2).

9. A battery pack, comprising the battery thermal management system of any one of claims 1-8.

10. An electrical device, comprising the battery pack of claim 9.
